Europäisches Patentamt

European Patent Office

Office européen des brevets

(11) Numéro de publication: **0 368 718 B1**

# (12) FASCICULE DE BREVET EUROPEEN

(45) Date de publication de fascicule du brevet: **13.04.94** (51) Int. Cl.5: **G06F 15/72**

(21) Numéro de dépôt: **89402971.9**

(22) Date de dépôt: **27.10.89**

(54) **Procédé de sélection d'un objet dans un référentiel à N dimensions et de visualisation de l'objet sélectionné.**

(30) Priorité: **04.11.88 FR 8814457**

(43) Date de publication de la demande:
**16.05.90 Bulletin 90/20**

(45) Mention de la délivrance du brevet:
**13.04.94 Bulletin 94/15**

(84) Etats contractants désignés:
**DE ES GB IT NL**

(56) Documents cités:
**EP-A- 0 204 225**

**COMPUTER VISION, GRAPHICS, AND IMAGE PROCESSING, vol. 43, no. 3, septembre1988, pages 409-431, Duluth, MN, US; CHEN et al.: "A surrey of construction andmanipulation of octrees"**

**PROCEEDINGS OF THE 7TH ANNUAL CONFERENCE OF THE IEEE/ENGINEERING IN MEDICINEAND BIOLOGY SOCIETY, Chicago, Illinois, 27-30 septembre 1985, vol. 1, pages612-615, IEEE, New York, US; D.J. MEAGHER: "The application of octreetechniques to 3-D medical imaging"**

**COMPUTER VISION, GRAPHICS, AND IMAGE PROCESSING, vol. 36, no. 1, octobre 1986,pages 100-113, Academic Press, Inc., Duluth, MN, US; C.H. CHIEN et al.:"Volume/surface octrees for the representation of three-dimensional objects"**

(73) Titulaire: **GE MEDICAL SYSTEMS S.A.**
**100, rue Camille-Desmoulins**
**F-92130 Issy les Moulineaux(FR)**

(72) Inventeur: **Lis, Olivier**
**Cabinet Ballot-Schmit**
**7 rue le Sueur**
**F-75116 Paris(FR)**

(74) Mandataire: **Ballot, Paul Denis Jacques**
**Cabinet Ballot-Schmit,**
**7, rue Le Sueur**
**F-75116 Paris (FR)**

EP 0 368 718 B1

## Description

La présente invention a pour objet un procédé de sélection d'un objet dans un référentiel à N dimensions, et un procédé de visualisation de l'objet sélectionné. La sélection de l'objet consiste essentiellement à établir la liste des coordonnées des lieux du référentiel qui sont censés se trouver dans cet objet. Au sens de coordonnées, on entendra dans l'invention le sens large : il s'agit d'informations octree organisées en un univers objet. Ces informations octree, ces coordonnées, sont obtenues par décomposition de l'univers selon une méthode octree en noeuds pères, et en noeuds fils de ces noeuds pères. L'invention vise principalement le traitement d'objets codés numériquement sous forme arborescente de type octree. Ultérieurement à ce traitement les objets codés peuvent être visualisés, mesurés etc... L'invention contribue à améliorer les traitements ultérieurs.

Le codage numérique d'images sous forme arborescente, forme généralement appelée octree, est bien connu par de nombreuses publications, comme par exemple l'article de D. J. R. MEAGHER : "High speed display of 3D medical images using octree encoding" parue dans "RENSSELAER POLYTECHNIC INSTITUTE TECHNICAL REPORT" de septembre 1981, ou bien l'article du même auteur "Geometric modeling using octree encoding" paru dans la revue "COMPUTER GRAPHICHS AND IMAGES PROCESSING" n° 19 de juin 1982, pages 129 à 147. Par ailleurs on connaît, d'après le brevet US N° 4 694 404 ou par la demande de brevet européen publiée sous le n° 0 152 741 un procédé de visualisation en trois dimensions (3D) partant d'images d'un objet codé sous forme d'octree. Ce procédé consiste essentiellement à former, à partir des informations octree organisées en un univers objet, la projection dans un plan cible, parallèle à un écran d'observation, de cet objet. D'autres procédés sont connus qui permettent à partir d'une décomposition octree donnée, de représenter l'objet selon une autre incidence, par exemple vue de 3/4 arrière, ainsi qu'avec des conditions d'éclairement différentes.

Mais toutes ces techniques ont en commun l'utilisation d'objets déjà obtenus par décomposition de l'univers selon une méthode octree. Eventuellement il est possible, dans certaines conditions, de ne s'intéresser qu'à certaines parties des objets ainsi sélectionnés. On connaît essentiellement les partitions de l'univers effectuées à partir de plans. Selon ces partitions des parties de l'objet situées d'un côté d'un plan peuvent être éliminées de manière à n'appliquer les traitements ultérieurs que sur les parties restantes. En outre, des combinaisons de plans peuvent conduire à la détermination de sous-univers restreints. Les partitions les plus faciles à réaliser concernent des partitions orientées selon les trois axes de coordonnées X Y Z du référentiel. En effet, la décomposition octree s'opère sur un volume numérique. Un volume numérique représente schématiquement un objet à étudier ou à construire. Cet objet est défini par une information représentative d'une propriété de l'objet (en tomodensitométrie cette propriété peut être la densité radiologique), associée aux coordonnées de repérage de l'élément de volume de cet objet affecté de cette propriété. Le repérage est un repérage à trois dimensions selon les trois axes XYZ. Ce repérage correspond à des adresses en mémoires des cellules mémoire comportant les informations correspondantes.

D'une manière connue les adresses comportent des moments d'adresse représentatifs de chacun des axes de coordonnées. Une des partitions des objets à examiner les plus simples consiste donc à extraire de cet objet tous les éléments de volume dont les moments d'adresse sont liés entre eux par une relation linéaire. En effet de telles relations linéaires sur les coordonnées du référentiel définissant des plans. Par exemple, on pourra extraire tous les éléments de volume dont le premier moment d'adresse, représentatif de la coordonnée X, est positif.

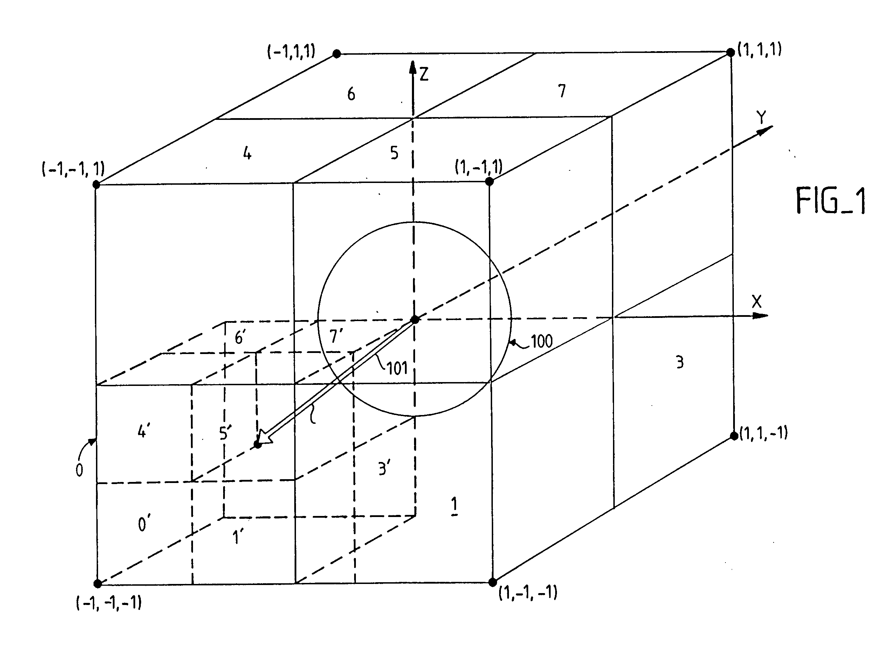

Les coordonnées d'un élément de volume dans une décomposition de type octree ont une structure un peu différente de celle connue en représentation cartésienne XYZ. Un élément de volume ou octant est défini par une adresse composite constituée de la manière suivante. Pour pouvoir décomposer un objet contenu dans un cube univers, on procède à une dichotomie hiérarchique. Pour cela, on partage le cube en huit cubes égaux en divisant ce cube en deux parallèlement à chacun des six plans principaux qui le limitent. Chacun des sous-cubes peut être similairement divisé en huit sous-sous-cubes et ainsi de suite. On obtient ainsi une hiérarchie à plusieurs niveaux, au sommet de laquelle (niveau O par définition) se situe le cube univers de départ. Au niveau 1 on a les premiers sous-cubes et ainsi de suite. Le cube de départ est dit le père , ou noeud père, des huit sous-cubes qui sont appelés noeuds fils. Chacun de ces sous-cubes fils est lui-même le père de huit sous-sous-cubes ainsi de suite. La figure 1 représente, aux niveaux de décomposition 0, 1 et 2 cette dichotomie hiérarchique. La décomposition d'un cube est toujours effectuée en numérotant les sous-cubes d'une même manière Ainsi, dans le cube principal représenté on distingue huit sous-cubes numérotés de 0 à 7, les quatre premiers se trouvant dans un plan inférieur, et les quatre suivants dans un plan supérieur. De même au niveau de décomposition n° 2, le sous-cube 0 a été décomposé en huit sous-sous-cubes cotés 0' à 7'. Ces sous-cubes sont rangées de la même façon que les sous-cubes cotés de 0 à 7 étaient rangés dans le cube principal. Cette permanence de la partition conduit, d'une manière connue en technique octree, à préserver dans l'adresse d'un noeud (d'un cube à un niveau donné), d'une part le niveau hiérarchique auquel il appartient, et d'autre part les coordonnées respectives des centres des noeuds fils. Il en résulte que la partition selon ses axes principaux d'un volume numérique, aisément transposable en une partition selon les moments d'adresse de la représentation de ce volume numérique en mémoire, est également aisément transposable en décomposition octree de l'objet.

Mais une décomposition selon des plans n'est pas toujours bien adaptée. Par exemple, on peut vouloir visualiser, dans un volume numérique représentatif en génie médical d'une acquisition de la tête, un oeil. On comprend qu'il est préférable d'approcher, dans le volume numérique, la forme de l'oeil par une sphère plutôt que par un cube. Si par exemple on veut calculer la densité radiologique moyenne de cet oeil, la partition avec des plans est peu pratique. On peut affiner la représentation avec des plans en créant des volumes à multifacettes et en utilisant des propriétés des plans inclinés pour extraire des informations concernant une partie ronde d'un objet. Mais cette manière de représenter a un inconvénient. Elle occupe les machines de traitement de données pendant des durées incompatibles avec des intentions de travail en temps réel. En effet une surface courbe, comme l'oeil, est d'autant mieux imitée que le volume qui l'approche a plus de facettes. Le calcul des plans correspondant à ces facettes est d'autant plus long qu'elles sont nombreuses. On connaît cependant des techniques de génération rapide de valeurs de coordonnées représentant des surfaces polygonales d'approximation de surfaces courbes (EP-A-204225).

Par ailleurs la définition de surfaces courbes pour limiter des objets conduit à des équations de combinaison des coordonnées qui sont au moins du deuxième degré en X Y ou Z. Sans entrer dans le détail, l'approche d'objet par des surfaces courbes nécessite le calcul d'opérations de multiplication par les processeurs de traitement. Les opérations de multiplication sont malheureusement des opérations trop longues à effectuer, surtout si elles sont faites en grande masse : elles aussi s'opposent à une utilisation en temps réel.

L'invention a pour objet de remédier à ces inconvénients en proposant malgré tout des partitions avec des surfaces courbes comportant, dans leur expression cartésienne, des termes du deuxième degré. Mais l'invention apporte une simplification telle qu'elle permet le calcul en temps réel. En substance en remplaçant dans ces expressions l'ensemble des termes du second degré par des constantes, et en appliquant judicieusement un changement de repère à chaque changement de niveau hiérarchique de la décomposition octree, on peut arriver à une expression simplifiée qui permet, comme pour la partition avec des plans, de ne prendre en considération que les parties de l'objet se situant du bon côté par rapport à la surface de partition. Le changement de repère est assimilable à un décalage d'adresse. On montrera qu'il peut être pré-calculé d'une part, et qu'il ne comporte que des opérations d'addition et de soustraction binaires d'autre part. Le remplacement des termes du deuxième degré par une constante conduit à éliminer toutes les multiplications qui faisaient perdre du temps. En outre des surfaces courbes sont combinables entre elles pour définir des volumes complexes.

L'invention a donc pour objet un procédé de sélection d'adresses représentatives de coordonnées d'un objet dans un référentiel dit univers
- les coordonnées de parties de cet objet étant obtenues par décomposition de l'univers, selon une méthode octree, en noeuds pères et en noeuds fils de ces noeuds pères,
- cet objet étant limité dans l'espace par au moins une surface, dite primitive, exprimée par une fonction primitive $F_1 = ax^2 + by^2 + cz^2 + dyx + exz + fyz + gx + hy + iz + j \geq 0$ comportant des termes du deuxième degré, x y et z étant des coordonnées cartésiennes de lieux de l'espace, et a b c d e f g h i et j des coefficients de détermination de la primitive,
- cette obtention comportant l'évaluation de la fonction primitive pour chaque noeud père de la décomposition en octree de l'univers,
- cette évaluation étant associée à un état, plein, vide ou partiel, attribué à un noeud père selon les valeurs prises par la fonction primitive à ce stade de la décomposition, un noeud étant déclaré plein s'il se trouve entièrement d'un côté donné de la primitive, vide s'il se trouve entièrement de l'autre côté, et partiel s'il est à cheval sur cette primitive, cette évaluation étant faite en portant des valeurs de coordonnées d'un point du noeud dans la fonction primitive,le noeud étant à cheval si la valeur de la fonction est différente pour deux points de ce noeud, ce procédé étant caractérisé en ce qu'il comporte
- des étapes de remplacement de la fonction primitive par une fonction du premier degré

$gx + hy + iz + j - k_1$

dans laquelle des termes du deuxième degré de la fonction primitive sont remplacés par une

EP 0 368 718 B1

constante $k_1$,

- une étape d'évaluation de cette fonction du premier degré, pour déterminer l'état de chaque noeud père et, quand l'état d'un noeud père est partiel,
- une étape de changement de repère du référentiel du type x' = 2x-$\epsilon_x$, x' étant une coordonnée d'un point d'un noeud dans un nouveau repère correspondant à une même coordonnée du même point du même noeud dans un précédent repère et $\epsilon_x$ étant une variable valant -1 +1 ou 0 selon la place d'un noeud fils considéré dans le noeud père dont il provient, cette étape servant à déterminer l'état de chaque noeud fils de ce noeud père à partir d'une fonction du premier degré simple

$$-|g| - |h| - |i| + j - k_1 \geq O$$

déduite de cette fonction du premier degré.

L'invention sera mieux comprise à la lecture de la description qui suit et à l'examen des figures qui l'accompagnent. Celles ci ne sont données qu'à titre indicatif et nullement limitatif de l'invention. Les figures montrent :

FIG. 1 : une représentation schématique d'une décomposition octree;

Fig. 2 : une application de l'invention dans un cas médical;

Fig. 3 : une représentation schématique de certains effets de l'invention.

La figure 1 montre un univers repéré par rapport à un référentiel XYZ. Cet univers est déterminé sur un support borné. Il a la forme d'un cube dont les sommets ont par exemple des coordonnées x = ±1, y = ± 1 et z = ± 1. Dans une décomposition octree chaque noeud est évalué pour savoir s'il possède ou non la propriété recherchée. Pour simplifier l'explication la propriété recherchée est, dans l'invention, le fait que le noeud se trouve totalement, en partie, ou pas du tout derrière une surface donnée dont on connaît l'équation. Cette équation a dans l'invention la particularité de posséder des termes du deuxième degré en x y z.

Par exemple, pour fixer les idées, on va chercher à savoir quels sont les noeuds qui sont situés à l'intérieur d'une sphère 100 de diamètre unité représentée au centre du cube de la figure 1. Le noeud principal, tout l'univers en entier, n'est pas totalement inclus dans la sphère 100. Ceci est visible puisque la sphère a été au contraire volontairement dessinée plus petite que le cube entier. Par conséquent, au niveau zéro, le noeud principal sera dit partiel. La décomposition du noeud principal en huit noeuds fils numérotés de 0 à 7 conduit, à l'examen de la figure 1 à la constatation que chacun des noeuds 0 à 7 n'est lui-même aussi qu'en partie contenu dans la sphère 100. En conséquence, chacun de ces noeuds donnant lieu à une indétermination, sera lui-même décomposé en des noeuds fils.

Pour l'exemple, on a décomposé le noeud 0 en huit noeud fils numérotés de 0' à 7'. Avec les dimensions précitées de la sphère, on constate que seul le noeud 7' est compris en partie dans la sphère 100. Les autres noeuds 0' à 6' sont dits vides puisqu'ils sont complètement extérieurs à la sphère 100. On procédera alors à une décomposition supplémentaire (non représentée) du noeud 7' en des noeuds 0'' à 7''. Intuitivement on évalue, si le noeud 0'' est vide (il est complètement extérieur à la sphère 100), que le noeud 7'' est lui plein. Il est complètement intérieur à la sphère 100. En définitive, si un noeud n'a pas d'intersection avec le volume intérieur à la surface il est dit vide (noté E pour empty en anglais). Si un noeud est entièrement inclus dans la surface, il est dit plein (noté F pour full en anglais). Si un noeud n'est ni vide, ni plein, il est alors dit partiel, et il est noté P.

Si un noeud est partiel il peut être à nouveau subdivisé et des tests permettent de définir les états des noeuds fils de ce noeud père Cette subdivision peut se terminer à tout moment, soit que l'information (E, P, ou F) soit suffisante pour le traitement souhaité, ou même seulement possible, ou soit que le nombre de subdivisions successives (également appelées résolutions) soit suffisamment important pour qu'une subdivision supplémentaire soit inutile.

L'équation $F_1$ des lieux se trouvant d'un coté particulier d'une surface du deuxième degré est du type suivant :

$$F_1 = ax^2 + by^2 + cz^2 + dyx + exz + fyz + gx + hy + iz + j \geq 0 \qquad I$$

On voit que l'expression de la surface courbe dite primitive possède ainsi des termes du deuxième degré en $x^2$, $y^2$, ou $z^2$, ou même des termes du deuxième degré en xy, en xz ou en yz. Si on désire savoir si un point de l'univers, du référentiel, se trouve d'un côté particulier de cette surface on vérifie que l'inégalité est satisfaite pour ce point. Par la suite, on dira que la primitive est pleine, pour un noeud donné, si pour tous les points contenus dans ce noeud l'inégalité est satisfaite. On dira de même que la primitive est vide si pour tous les points de ce noeud donné, l'inégalité n'est pas satisfaite. Une primitive est dite ni vide ni

4

pleine et le noeud concerné se voit attribuer la qualification de partiel, si, pour certains points de ce noeud la primitive est satisfaite, et si pour certains autres, elle ne l'est pas. Conformément à ce qui a été indiqué précédemment la décomposition octree va être entreprise : du noeud de niveau zéro jusqu'au noeud de niveau le plus élevé pour savoir quels sont les noeuds pour lesquels la primitive est satisfaite et ceux pour lesquels elle ne l'est pas. Le niveau le plus élevé peut être déterminé à l'avance ou bien peut être déterminé au cours de l'exécution de l'algorithme. En retenant ultérieurement uniquement les noeuds pour lesquels la primitive est satisfaite, on aura opéré la sélection d'un objet ayant la forme de la surface représentée par l'équation de la primitive indiquée. La sélection de cet objet revient à avoir sélectionné ses coordonnées dans la décomposition octree. Il est alors tout à fait intéressant de sélectionner dans un objet général résultant de la décomposition octree d'un volume numérique les noeuds qui ont les mêmes coordonnées que celles de l'objet ainsi sélectionné.

Telle que l'expression apparaît dans l'équation I le calcul de la fonction $F_1$ pour un noeud doit être mené pour toutes les valeurs x y z des lieux appartenant à ce noeud. Ceci revient à effectuer un travail considérable. Dans l'invention, partant du fait que l'univers est cubique à l'origine (délimité, suivant le repère XYZ, par les points -1-1-1 à +1+1+1), on a pu déduire que chaque coordonnée serait inférieure, en valeur absolue, à 1. On a ensuite procédé à une simplification en écrivant :

$$G_1 = ax^2 + by^2 + cz^2 + dxy + exz + fyz + k \qquad \text{II}$$

Dans cette formule les coefficients a à f sont les mêmes que ceux qui permettent de définir $F_1$ et le coefficient k représente une constante. Partant du fait que le support de définition de l'univers est borné, on a alors remarqué qu'il existait une valeur particulière de k, appelée $k_1$, telle que $G_1$ soit positive ou nulle quelle que soit la valeur de x y ou z appartenant à l'univers borné étudié. En effet, il suffirait de choisir par exemple $k_1$ tel que

$$k_1 \geq k = |a| + |b| + |c| + |d| + |e| + |f| \qquad \text{III}$$

Mais on pourrait bien entendu choisir une autre valeur de $k_1$. Ce qui est important de remarquer est qu'il est certain qu'une valeur $k_1$ existe, pour laquelle $G_1$ est positive ou nulle quelle que soit le point de l'univers borné étudié. On verra par la suite comment on peut affiner la méthode en choisissant certaines valeurs particulières de $k_1$. On a remarqué par ailleurs qu'il existait de la même façon une valeur $k_2$ pour laquelle $G_1$ sera négative ou nulle, ou même strictement négative, quelle que soit la valeur de x ou y ou z du moment qu'ils appartiennent à l'univers borné défini. Si la détermination de $k_1$ conduit à la définition de $G_1$ on dira que la définition de $k_2$ conduit à la définition d'une expression $G_2$ de la forme suivante :

$$G_2 = ax^2 + by^2 + cz^2 + dxy + exz + fyz + k_2 \qquad \text{IV}$$

Dans la pratique $k_1$ et $k_2$ peuvent être déterminés de sorte que $G_1$ et $G_2$ soient nulles en au moins un point de l'univers étudié. Mais on peut montrer qu'il n'est pas nécessaire que cela soit le cas. Il est très important de constater que $k_1$ et $k_2$ ne dépendent que des coefficients a, b, c, d, e, f (coefficients des termes du deuxième ordre de l'expression de la surface courbe de la primitive).

Cette simplification permet de remplacer l'écriture de la primitive de la formule I par les écritures suivantes, selon qu'on cherche à tester si la primitive est pleine ou si elle est vide :

$$F_1 = G_1 + gx + hy + iz + j - k_1 \qquad \text{V}$$

$$F_1 = G_2 + gx + hy + iz + j - k_2 \qquad \text{VI}$$

Le test visant à montrer que la primitive est pleine ou que la primitive est vide peut alors être remplacé par un test plus simple, constituant une condition suffisante mais non nécessaire. Dans ce test, sachant que si $G_1$ est positif, il suffira, pour que la primitive soit pleine à coup sûr que :

$$gx + hy + iz + j - k_1 \geq O$$

quelles que soient les valeurs de x y et z appartenant au référentiel. Or, comme le référentiel est borné par -1 et +1, cette condition peut elle-même se transformer en une autre condition également suffisante mais également non nécessaire :

$-|g| - |h| - |i| + j - k_1 \geq O$     VII

De même, la détermination que la primitive est vide reviendra à vérifier que :

$|g| + |h| + |i| + j - k_2 < O$     VIII

Dans ces expressions g, h, i, et j sont les valeurs précédemment déterminées pour la fonction primitive $F_1$ indiquée. On remarque que la fonction primitive $F_1$ ne peut pas être simultanément pleine et vide. En particulier du fait qu'on a choisi des conditions suffisantes, on se trouvera dans l'état d'un noeud plein si la formule VII est vérifiée, dans le cas d'un noeud vide si la formule VIII est vérifiée. Dans les autres cas, ou ni VII ni VIII ne sont vérifiés, la fonction F1 peut être partielle, vide ou pleine. On considère alors qu'une subdivision de ce noeud en ses noeuds fils est nécessaire, à moins qu'on ait atteint le niveau le plus élevé. Auquel cas le noeud prend la valeur déterminé à l'avance pour les noeuds de fonction F1 partielle à ce niveau (en pratique pleine). Le fait de subdiviser un noeud qui pourrait être plein ou vide du fait qu'il n'a pas été déterminé précédemment à l'aide des conditions VII et VIII n'est pas gênant pour deux raisons :
    1) Après subdivision, les noeuds fils seront déterminés de la même manière que précédemment.
    2) La somme de calculs à réaliser en plus peut être parfaitement limitée pour le choix des constantes $k_1$ et $k_2$ les plus appropriées :
        $k_1$ = la plus petite valeur telle que $G_1$ est positive ou nulle.
        $K_2$ = la plus grande valeur telle que $G_2$ est négative.
En pratique pour certaines fonctions, demi-espaces, sphères par exemple, ce cas peut n'apparaître que très exceptionnellement si les constantes $k_1$ et $k_2$ sont optimisées comme décrit ci-dessus.
    Dans le cas où on a affaire à un noeud partiel, comme c'est le cas du niveau zéro de la dichotomie hiérarchique évoquée jusqu'à présent, il convient d'étudier la valeur de la fonction $F_1$ pour les noeuds fils du noeud partiel père ainsi trouvé. Dans l'invention on a découvert qu'il était alors très utile d'effectuer, avant d'évaluer la valeur de la primitive pour les noeuds fils, un changement d'origine du repère permettant de repérer les bornes du noeud fils (les sommets du sous-cube noeud fils). Ce changement de repère numéroté 101 sur la figure 1, revient à remplacer les coordonnées x y z des points de l'univers par des coordonnées x' y' z' données par :

$x' = 2x - \epsilon_x$
$y' = 2y - \epsilon_y$     IX
$z' = 2z - \epsilon_z$

Dans cette expression $\epsilon$ a les valeurs données par le tableau suivant selon le numéro du sous-cube fils concerné :

| N° | $\epsilon_x$ | $\epsilon_y$ | $\epsilon_z$ | |
|---|---|---|---|---|
| 0 | +1 | +1 | +1 | |
| 1 | −1 | +1 | +1 | |
| 2 | +1 | −1 | +1 | |
| 3 | −1 | −1 | +1 | X |
| 4 | +1 | +1 | −1 | |
| 5 | −1 | +1 | −1 | |
| 6 | +1 | −1 | −1 | |
| 7 | −1 | −1 | −1 | |

On constate en agissant ainsi que le changement de variable revient à donner au sommet du sous-cube 0 fils du cube de départ, des coordonnées x' y' z' comprise entre plus et moins un, comme précédemment pour les coordonnées x y z du cube de départ. Par ailleurs le choix de $\epsilon_x$, $\epsilon_y$ et $\epsilon_z$ est dicté par la position du sous-cube dans le cube père. Comme d'un cube père aux cubes fils qui en dépendent, la répartition des sous-cubes est immuable, le tableau X peut être utilisé en permanence. De même le changement de variable IX pourra être effectué à nouveau pour le sous-cube 7', par exemple. Dans ce changement de variable, le centre du repère est déplacé au centre du cube 7'. Dans l'équation IX, x' est alors remplacé par x'', x par x', et ainsi de suite.

L'expression de $F_1$, en remplaçant x y et z par leurs valeurs en fonction de x' y' et z', conduit à une expression $F'_1$ du même type que l'expression de $F_1$. Dans l'expression de $F'_1$ les coefficients a à j sont remplacés par des coefficients a' à j' tels que :

$$a' = a$$
$$b' = b$$
$$c' = c \qquad \text{XI}$$
$$d' = d$$
$$e' = e$$
$$\text{et } f' = f$$

$$g' = 2g + 2a\,\epsilon_x + d\epsilon_y + e\epsilon_z$$
$$h' = 2h + d\,\epsilon_x + 2b\,\epsilon_y + f\,\epsilon_z \qquad \text{XII}$$
$$i' = 2i + e\,\epsilon_x + f\,\epsilon_y + 2_c\,\epsilon_z$$

$$j' = 4j + a + b + c + d\epsilon_x\epsilon_y + e\epsilon_x\epsilon_z + f\epsilon_y\epsilon_z + 2g\epsilon_x + 2h\epsilon_y + 2i\epsilon_z \qquad \text{XIII}$$

Il est intéressant de remarquer que le changement de variable ainsi effectué conduit à la définition de coefficients a' à f' égaux respectivement aux coefficients a à f. En conséquence, les valeurs de $G_1$ et de $G_2$ ne sont pas affectées par ce changement de variable. Les définitions de $k_1$ et de $k_2$ peuvent être maintenues telles qu'elles avaient été choisies à l'origine.

En outre, le calcul des coefficients g', h' et i' est un calcul qui s'effectue sans multiplication. Plutôt, ce calcul s'effectue par des multiplications de nombres variables (a à i) par des nombres connus d'avance 2 et $\epsilon_x$, $\epsilon_y$ et $\epsilon_z$. Or, d'une part les nombres connus d'avance reviennent à effectuer les opérations simples d'une multiplication, et d'autre part, les derniers de ces nombres connus d'avance n'entraînent eux mêmes aucune multiplication mais seulement des changements de signe. On conçoit en effet qu'il est beaucoup plus rapide, par exemple, de faire exécuter l'opération $2b.\epsilon_y$ si seulement b doit être une valeur quelconque plutôt que de faire exécuter des multiplications du type a.x.y si a, x et y peuvent être quelconques. En outre, les produits du type $\epsilon_x\,\epsilon_y$ peuvent être pré-calculés dans une table complémentaire de la table X. En effet, leurs valeurs ne peuvent être que +1 ou -1.

Il résulte de ce changement de repère et de l'utilisation des constantes $k_1$ et $k_2$ que le test sur la fonction $F_1$ pour les noeuds fils est simple. Il revient en effet à exécuter le test des formules VII et VIII dans lesquelles g, h, i et j sont remplacés par g', h', i' et j'. En définitive, en gardant en mémoire le niveau hiérarchique auquel on se trouve, on évite ainsi de tester une valeur quelconque de x, y ou z. On se rend compte que la technique utilisée permet d'aboutir rapidement aux noeuds pleins, de l'univers représenté sur la figure 1, sans avoir effectué de calculs compliqués.

La collection de ces noeuds pleins, avec leur niveau hiérarchique et leur numéro de noeud, est une collection d'adresses de noeuds que l'on peut prélever dans un volume numérique quelconque. En agissant sur la valeur des coefficients a à j on peut déterminer une surface courbe, du deuxième degré, quelconque pour laquelle on veut connaître les octants pleins. Il suffit en plus de déplacer cette surface pour la superposer dans un volume numérique à un endroit quelconque, à un oeil, pour acquérir immédiatement des informations (de densité radiologique) correspondant aux noeuds représentant cet endroit, l'oeil. On verra par la suite, comment utiliser en plus cette sélection pour effectuer la représentation de l'objet sélectionné.

La surface 100 n'est pas nécessairement une surface fermée. En effet, il est possible( par exemple si la surface 100 est celle d'un paraboloïde de révolution) que cette surface ne soit pas entièrement comprise dans l'univers de départ. Elle peut être une surface ouverte. Ceci n'a pas d'importance. Dans tous les cas on peut déterminer quels sont les noeuds de l'univers qui se trouvent d'un côté de cette surface et quels sont les noeuds qui se trouvent de l'autre côté. Ce qui est intéressant dans l'invention, est que la surface de partition de l'univers n'est plus nécessairement plane. De même que dans l'état de la technique citée, il est possible d'associer plusieurs partitions ensemble par des opérations booléennes de type union, intersection, complémentaire et soustraction.

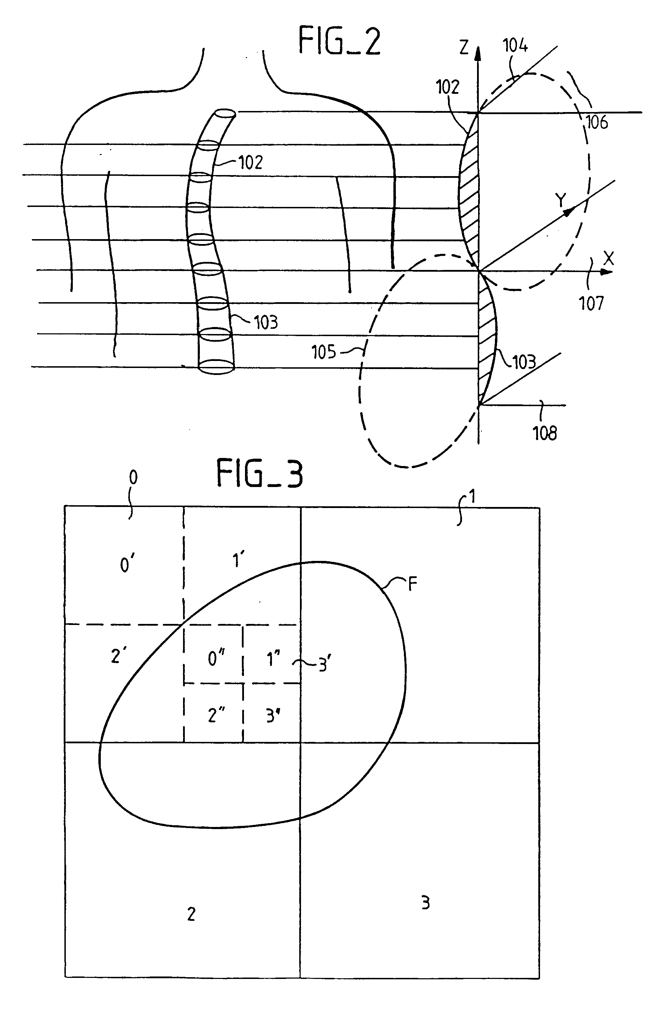

La figure 2 représente schématiquement une sélection, dans un volume numérique représentant des informations de densité radiologique acquises dans la cage thoracique d'un individu, des parties de sa colonne vertébrale qui sont coupées par une surface courbe. La représentation de la figure 2 permet ainsi d'imaginer de remplacer la ligne centrale de cette colonne vertébrale par la trace de portions de deux cylindres 102 et 103, courbés en sens inverse l'un de l'autre. Les cylindres ont des génératrices parallèles. La ligne centrale peut être considérée comme située sur des cercles respectivement 104 et 105. Les cercles 104 et 105 sont sécants au centre du repère. La définition des directrices des surfaces cylindriques 102-103 de coupe peut être obtenue par la réunion d'une portion du cercle 104 avec une autre portion du cercle 103. La portion du cercle 104 peut être limitée de part et d'autre par des plans 106 et 107. Le plan 106 est parallèle au plan 107 qui est le plan xy avec z = O. De même une portion du cercle 105 est comprise entre le plan 107 et un plan 108. Le plan 108 est symétrique du plan 106 par rapport au plan 107. L'équation booléenne du volume ainsi représenté s'écrira de la manière suivante :

$$(104 \cap 106 \cap 107) \cup (107 \cap 105 \cap 108) \qquad \text{XIV}$$

Dans cette expression, la fonction $F_1$ utilisée précédemment sera remplacée par une combinaison de fonctions $F_{104}$ et $F_{105}$ représentatives respectivement des cercles 104 et 105. La définition de la fonction $F_{104}$ conduit à la détermination de deux coefficients $k_1$ et $k_2$, relative au cercle 104. On remarquera que pour la partie haute de la figure, les plans 106 et 107 conduisent à des fonctions primitives du premier ordre simples. En conclusion un noeud sera du type plein pour la portion 102 s'il souscrit à la première partie de l'union booléenne de la formule XIV. De même un autre noeud pourra être dit plein s'il remplit les conditions pour le deuxième membre de l'union booléenne de la formule XIV. La détermination de l'appartenance d'un noeud à un de ces deux membres revient à effectuer trois tests pour la détermination du caractère plein, et trois tests pour la détermination du caractère vide. On pourrait donc penser que pour chaque noeud il y a lieu d'effectuer douze tests au total. Cependant, l'algèbre booléenne nous conduit au résultat suivant concernant la combinaison de fonctions.

| $\overline{F}$ | F | H | F∪H | F∩H | |
|---|---|---|---|---|---|
| F | E | E | E | E | |
| F | E | F | F | E | |
| F | E | P | P | E | |
| E | F | E | E | E | |
| E | F | E | E | E | |
| E | F | F | F | F | XV |
| E | F | P | F | P | |
| P | P | E | P | F | |
| P | P | F | F | P | |
| P | P | P | P | P | |

Ce tableau XV indique , par exemple, que si un noeud est réputé vide pour une des deux primitives F ou H, il n'est pas nécessaire d'évaluer l'état de l'autre primitive pour le même noeud, si on s'intéresse à l'intersection de ces primitives. En effet, si F a pour résultat E (empty) dans un noeud donné le résultat de la combinaison F∩H est automatiquement E. A l'opposé pour l'union booléenne, il suffit qu'un noeud soit plein pour une fonction pour qu'il soit plein pour la réunion de ces fonctions. En définitive, on pourrait montrer que cette dernière constatation limite notablement le nombre des tests à exécuter. Enfin si une des primitives est vide ou pleine et l'autre partielle, la subdivision du noeud si nécessaire (résultat de l'opération booléenne partiel) ne devra être effectuées que pour cette primitive. Ceci réduit considérablement les calculs à effectuer dans le cas d'un nombre important de primitives.

L'intérêt de la méthode décrite est de permettre de déterminer la présence (ou l'absence) d'un objet à l'intérieur d'une surface complexe constituée de primitives du deuxième degré. Ceci permet en outre, par la suite la visualisation tri-dimensionnelle de l'objet sélectionné par des techniques connues, par exemple de lancers de rayons, ou de projections de quadtree sur octree (suivant un des trois axes principaux) ou suivant tout autre procédé utilisant la décomposition octree.

Les opérations booléennes entre différents objets peuvent permettre de ne visualiser que les parties de volumes numériques contenues dans un volume défini par ces différents objets. Ou elles peuvent permettre de mesurer les caractéristiques du volume inclus (mesure de la masse, mesure de la densité radiologique moyenne,..).

Pour la visualisation tri-dimensionnelle, le fait de visiter l'arborescence octree permet d'obtenir directement la normale à une surface. En effet pour une résolution quelconque, l'équation de la primitive dont on veut projeter la surface est de la forme de la formule I (avec les changements de repère associés). Une bonne approximation d'un plan perpendiculaire à cette primitive est le plan défini par:

$$gx + hy + iz = O$$

Le vecteur normal à cette surface a pour composantes respectivement g, h et i. Ce vecteur peut être utilisé comme la normale à l'objet sélectionné à l'endroit du noeud considéré. Ce vecteur doit d'ailleurs être normalisé avant d'être combiné avec une ou des sources de lumière utilisées pour obtenir une valeur d'ombrage pour la surface à représenter. L'intérêt de la méthode est donc de donner très rapidement, en une information complémentaire, la direction du vecteur normal à la surface sélectionnée. On remarque que la direction du vecteur normal est constituée par les coefficients des termes du premier degré de la fonction simple au niveau hiérarchique du noeud concerné.

La technique décrite est une technique permettant de produire à volonté une description octree d'un objet de type CSG, constructive solid geometry, construit à partir de primitives du deuxième ordre. Cette méthode s'applique également aux cas bi-dimentionnels pour lesquels les équations s'obtiennent sans difficulté. En effet, il suffit dans toutes les équations précédentes de remplacer z par zéro pour avoir les expressions correspondantes bi-dimensionnelles. La méthode peut par ailleurs se généraliser à N dimensions.

La figure 3 montre, dans un cas à deux dimensions, des particularités de la définition de $k_1$. On distingue sur cette figure une forme F. On constate que la primitive est manifestement partielle pour le volume initial. Après subdivision, la primitive est également partielle pour chacun des sous-carrés zéro à trois. Après division supplémentaire du sous-carré zéro, on constate que la primitive est encore partielle pour les sous-sous-carrés 1' et 2'. Les coefficients g, h, i et j ont été modifiés à chaque subdivision suivant les explications présentées précédemment. On va étudier le cas du sous-sous-cube 3'.

Dans certains cas une primitive peut être déclarée partielle bien qu'elle soit strictement positive ($G_1$) ou strictement négative ($G_2$) pour tous les points du noeud. Ceci conduit en quelque sorte à une indétermination liée à la définition de $k_1$ ou de $k_2$. Cependant, cela n'est pas gênant dans la mesure où les primitives partielles sont chacune étudiées sur des sous-volumes du volume dans lequel elles étaient déclarées partielles. Ainsi, le sous-sous-cube 3' a pu être déclaré partiel pour la fonction primitive F alors qu'il est manifestement complètement inclus dans cette surface. Cette imprécision du résultat est liée à l'imprécision de la détermination de $k_1$ et $k_2$. On a intérêt de ce point de vue à prendre $k_1$ et $k_2$ les plus proches possibles des valeurs respectivement minimum et maximum prise par les fonctions $F_1$. On remarque cependant que si le noeud 3' est déclaré, par erreur, partiel, les noeuds fils du noeud 3' seront eux déclarés pleins, tout au moins les noeuds 1'' 2'' et 3''. Le noeud 0'' peut lui par imprécision de la méthode continuer à être déclaré partiel. En résumé la technique de l'invention est plus rapide, mais elle peut dans certains cas conduire à une imprécision du contour de l'objet sélectionné. Cette imprécision peut être réduite en choisissant des valeurs de $k_1$ et $k_2$ les plus adéquates possible.

## Revendications

1. Procédé de sélection d'adresses représentatives de coordonnées (0,7') d'un objet (100) dans un référentiel dit univers
   - les coordonnées de parties de cet objet étant obtenues par décomposition de l'univers, selon une méthode octree, en noeuds pères et en noeuds fils de ces noeuds pères,
   - cet objet étant limité dans l'espace par au moins une surface, dite primitive, exprimée par une fonction primitive $F_1 = ax^2 + by^2 + cz^2 + dyx + exz + fyz + gx + hy + iz + j \geqq 0$ comportant des termes du deuxième degré, x y et z étant des coordonnées cartésiennes de lieux de l'espace, et a b c d e f g h i et j des coefficients de détermination de la primitive,

- cette obtention comportant l'évaluation de la fonction primitive pour chaque noeud père de la décomposition en octree de l'univers,
- cette évaluation étant associée à un état, plein, vide ou partiel, attribué à un noeud père selon les valeurs prises par la fonction primitive à ce stade de la décomposition, un noeud étant déclaré plein s'il se trouve entièrement d'un côté donné de la primitive, vide s'il se trouve entièrement de l'autre côté, et partiel s'il est à cheval sur cette primitive, cette évaluation étant faite en portant des valeurs de coordonnées d'un point du noeud dans la fonction primitive,le noeud étant à cheval si la valeur de la fonction est différente pour deux points de ce noeud, ce procédé étant caractérisé en ce qu'il comporte
- des étapes de remplacement de la fonction primitive par une fonction du premier degré

$$gx + hy + iz + j - k_1$$

dans laquelle des termes du deuxième degré de la fonction primitive sont remplacés par une constante $k_1$,
- une étape d'évaluation de cette fonction du premier degré, pour déterminer l' état de chaque noeud père et, quand l'état d'un noeud père est partiel,
- une étape de changement de repère du référentiel du type $x' = 2x - \epsilon_x$, x' étant une coordonnée d'un point d'un noeud dans un nouveau repère correspondant à une même coordonnée du même point du même noeud dans un précédent repère et $\epsilon_x$ étant une variable valant -1 + 1 ou 0 selon la place d'un noeud fils considéré dans le noeud père dont il provient, cette étape servant à déterminer l'état de chaque noeud fils de ce noeud père à partir d'une fonction du premier degré simple

$$-|g| - |h| - |i| + j - k_1 \geq O$$

déduite de cette fonction du premier degré.

**2.** Procédé selon la revendication 1 caractérisé en ce que :
- l'objet est limité par une surface définie par une combinaison logique booléenne de plusieurs primitives du deuxième degré,
- chaque primitive est remplacée par une fonction du premier ordre associée à une constante,
- on évalue une combinaison correspondante de ces fonctions du premier degré pour chaque noeud père, et, quand l'état de ce noeud père est partiel pour ladite combinaison correspondante,
- on change de repère selon un changement du type $x' = 2x - \epsilon_x$, pour utiliser, pour l'état de chaque noeud fils de ce noeud père, une combinaison simple de fonctions du premier degré déduite par logique booléenne de ladite combinaison correspondante.

**3.** Procédé selon l'une quelconque des revendications 1 ou 2 caractérisé en ce qu'il comporte en outre,
- une étape de visualisation d'une partie (102,103) d'un corps, cette partie ayant, dans ce corps, la forme limitée dudit objet dans l'univers, et en ce qu'au cours de cette étape de visualisation
- on applique à cette partie un éclairement produit par une source de lumière pour déterminer une valeur d'ombrage fonction de la direction de réflexion normale audit objet en chaque noeud considéré et des coefficients des termes du premier degré de la fonction simple.

## Claims

**1.** Method for selecting addresses representing coordinates (0, 7') of an object (100) in a reference frame referred to as the universe
- the coordinates of parts of this object being obtained by decomposing the universe by an octree method, into parent nodes and son nodes which are children of these parent nodes,
- this object being delimited in space by at least one surface, referred to as the primitive, expressed by a primitive function $F_1 = ax^2 + by^2 + cz^2 + dyx + exz + fyz + gx + hy + iz + j \geq 0$ including second degree terms, x, y and z being cartesian coordinates of locations in space, and a, b, c, d, e, f, g, h, i and j being coefficients for determining the primitive,
- this obtaining including the computation of the primitive function for each parent node in the octree decomposition of the universe,

- this computation being associated with a state, full, empty or partial, attributed to a parent node according to the values taken by the primitive function at this stage of the decomposition, a node being declared full if it is located entirely on a given side of the primitive, empty if it is located entirely on the other side, and partial if it straddles this primitive, this computation being made by putting values of coordinates of one point of the node in the primitive function, the node being straddling if the value of the function is different for two points of this node,
this method being characterised in that it includes
- steps in which the primitive function is replaced with a first-degree function

$$gx + hy + iz + j - k_1$$

in which second-degree terms of the primitive function are replaced by a constant $k_1$,
- a step in which this first-degree function is computed in order to determine the state of each parent node and, when the state of a parent node is partial,
- a step consisting of a change in reference of the reference frame of the type $x' = 2x - \epsilon_x$, $x'$ being a coordinate of a point of a node in a new reference corresponding to the same coordinate of the same point of the same node in a previous reference and $\epsilon_x$ being a variable equalling -1, +1 or 0 according to the position of a child node in question in the parent node from which it stems, this step serving to determine the state of each child node of this parent node from a simple first-degree function

$$-|g| - |h| - |i| + j - k_1 \geq 0$$

derived from this first-degree function.

2. Method according to Claim 1, characterised in that:
- the object is delimited by a surface defined by a Boolean logic combination of several second-degree primitives,
- each primitive is replaced by a first-order function associated with a constant,
- a corresponding combination of these first-degree functions is computed for each parent node and, when the state of this parent node is partial for the said corresponding combination,
- a change of reference is made in accordance with a change of the type $x' = 2x - \epsilon_x$, in order to use, for the state of each child node of this parent node, a simple combination of first-degree functions derived by Boolean logic from the said corresponding combination.

3. Method according to either one of Claims 1 or 2, characterised in that it also comprises
- a step in which a part (102, 103) of a body is displayed, this part having, in this body, the delimited shape of the said object in the world, and in that, during this display stage
- an illumination produced by a light source is applied to this part in order to determine a shading value which is a function of the reflection direction normal to the said object at each node in question and the coefficients of the first-degree terms of the simple function.

**Patentansprüche**

1. Verfahren zur Auswahl von Adressen, die Koordinaten (0,7') eines Objektes (100) in einem als Universum bezeichneten Referenzsystem darstellen,
- wobei die Koordinaten von Teilen des Objektes durch Zerlegung des Universums gemäß einem Octree-Verfahren, in Mutterknoten und in Tochterknoten der Mutterknoten erhalten werden,
- wobei das Objekt im Raum durch wenigstens eine als Primitive bezeichnete Fläche begrenzt ist, ausgedrückt durch eine Primitivenfunktion $F_1 = ax^2 + by^2 + cz^2 + dyx + exz + fyz + gx + hy + iz + j \geq 0$ ausgedrückt wird, die Terme der zweiten Ordnung umfaßt, wobei x y und z kartesische Ortskoordinaten des Raums und a b c d e f g h i und j Koeffizienten zur Bestimmung der Primitiven sind,
- wobei diese Darstellung die Auswertung der Primitivenfunktion für jeden Mutterknoten der Octree-Zerlegung des Universums umfaßt,
- wobei die Auswertung mit einem Zustand verbunden ist, voll, leer oder teilweise, der einem Mutterknoten gemäß den Werten zugeordnet ist, die durch die Primitivenfunktion in dieser Stufe der Zerlegung genommen worden sind, wobei ein Knoten als voll erklärt wird, wenn er sich ganz

11

auf einer gegebenen Seite der Primitiven befindet, leer, wenn er sich ganz auf der anderen Seite befindet, und teilweise, wenn er sich auf der Primtiven sitzend befindet, wobei die Auswertung durchgeführt wird, indem Koordinatenwerte eines Punktes des Knotens in der Primitivenfunktion getragen werden, wobei der Knoten aufsitzend ist, wenn der Wert der Funktion für zwei Punkte des Knotens unterschiedlich ist,

wobei das Verfahren dadurch **gekennzeichnet** ist, daß es umfaßt

- Schritte des Austausches der Primitivenfunktion durch eine Funktion der ersten Ordnung

$$gx + hy + iz + j - k_1$$

in der Terme der zweiten Ordnung der Primitivenfunktion durch eine Konstante $k_1$ ersetzt sind,

- einen Schritt der Auswertung dieser Funktion der ersten Ordnung zur Bestimmung des Zustandes jedes Mutterknotens und, wenn der Zustand eines Mutterknotens teilweise ist,
- einen Schritt zum Austauschen des Referenzpunktes des Referenzsystems vom Typ $x' = 2x - \epsilon_x$, wobei $x'$ eine Koordinate eines Punktes eines Knotens in einem neuen Referenzpunkt entsprechend einer selben Koordinate desselben Punktes desselben Knotens in einem vorhergehenden Referenzpunkt ist und $\epsilon_x$ eine Variable mit Wert -1 +1 oder 0 gemäß dem Ort eines betrachteten Tochterknotens im Mutterknoten ist, von dem er herkommt, wobei dieser Schritt dazu dient, den Zustand jedes Tochterknotens des Mutterknotens ausgehend von einer einfachen Funktion der ersten Ordnung zu bestimmen

$$- |g| - |h| - |i| + j - k_1 \geq 0,$$

die von dieser Funktion der ersten Ordnung abgeleitet ist.

2. Verfahren nach Anspruch 1, dadurch **gekennzeichnet, daß**
   - das Objekt durch eine Oberfläche begrenzt ist, die durch eine logische boolesche Kombination mehrerer Primitiven der zweiten Ordnung definiert ist,
   - wobei jede Primitive durch eine mit einer Konstanten verbundene Funktion der ersten Ordnung ersetzt ist,
   - eine entsprechende Kombination dieser Funktionen der ersten Ordnung für jeden Mutterknoten ausgewertet wird und, wenn der Zustand des Mutterknotens teilweise ist, für die entsprechende Kombination
   - der Referenzpunkt gemäß einer Änderung des Typs $x' = 2x - \epsilon_x$ geändert wird, um für den Zustand jedes Tochterknotens des Mutterknotens eine einfache Kombination von Funktionen der ersten Ordnung zu verwenden, die durch eine boolesche Logik von der entsprechenden Kombination abgeleitet ist.

3. Verfahren nach einem beliebigen der Ansprüche 1 oder 2, dadurch **gekennzeichnet, daß** es außerdem umfaßt
   - einen Schritt zur Sichtbarmachung eines Teils (102, 103) eines Körpers, wobei der Teil im Körper die begrenzte Form des Objekts im Universum aufweist, und daß im Verlauf dieses Sichtbarmachungsschrittes
   - auf den Teil eine Beleuchtung gegeben wird, die durch eine Lichtquelle erzeugt wird, um einen Schattenwert abhängig von der Normalreflexionsrichtung zum Objekt in jedem betrachteten Knoten und Koeffizienten der Terme der ersten Ordnung der einfachen Funktion zu bestimmen.

FIG_1

EP 0 368 718 B1

# FIG_2

# FIG_3